# EUROPEAN PATENT APPLICATION

(11) **EP 1 841 261 A2**
(43) Date of publication of application: **03.10.2007**
(21) Application number: 06256143.6
(22) Date of filing: 30.11.2006
(51) Int. Cl.: H04Q 7/38

(54) **Base station, radio terminal and radio communication method**

(30) Priority: 30.03.2006 JP 2006094392
(71) Applicant: KABUSHIKI KAISHA TOSHIBA, Tokyo (JP)
(72) Inventor: Sakata, Ren, Toshiba Corporation, Tokyo (JP)
(74) Representative: Jenkins, Peter David

(57) **Abstract**

According to an aspect of the present invention, there is provided with a base station which communicates with radio terminals through time frames for transmission by using a plurality of frequency channels, including: a reception section configured to receive communication quality information indicating communication quality of one or more frequency channels from each the radio terminal; a scheduling section configured to schedule frequency channels to be assigned to the respective radio terminals based on the communication quality information received from the respective radio terminals; a signal generation section configured to generate assignment status signals indicating whether or not respective frequency channels are already assigned in a second time frame next to a first time frame; and a reporting section configured to report the assignment status signals for the frequency channels to each the radio terminal through the first time frame.

## Description

### BACKGROUND OF THE INVENTION

### Field of the Invention

The present invention relates to a base station, radio terminal and radio communication method.

### Related Art

A communication scheme such as OFDM (Orthogonal Frequency Division Multiplexing) communication scheme or multicarrier CDMA (Code Division Multiple Access) communication scheme is attracting attention in recent years. In these communication schemes, digital signals are transmitted/received by being mapped to a plurality of subcarriers over wider bandwidth. These communication schemes make it possible to increase transmission rate and improve resistance to frequency selective fading. On the other hand, OFDMA (Orthogonal Frequency Division Multiple Access) which provides subbands (frequency channels) obtained by grouping a plurality of subcarriers to allow simultaneous communications with a plurality of terminals using the respective subbands is also known.

JP-A 2003-18117 (KOKAI) describes a method of setting a priority order for each terminal about assignment of subbands, based on an allowable delay time, required bit error rate and required transmission rate demanded by an application, that is, based on required QoS (Quality of Service).

Furthermore, a method of improving a communication speed in an OFDMA communication is also known. In this method, based on the fact that frequency characteristics of transmission paths vary among a plurality of terminals, subbands of good communication quality are selectively assigned to respective communication terminals to thereby improve the communication speed. Assigning subbands of good communication quality to the respective terminals requires a base station to acquire frequency characteristics of transmission paths. As one method for the requirement, a terminal feeds back quality information (CQI: Channel Quality Indicator) on all subbands to the base station. As another method, a terminal measures communication quality of all subbands and feeds back quality of subbands whose transmission paths are in good condition to a base station. This latter method is described in JP-A 2005-244958 (KOKAI).

However, according to the method described in JP-A 2005-244958 (KOKAI), when the base station plans preferential assignment of some subbands to some terminals, other terminals cannot easily know the situation about preferential assignment, and therefore the other terminals measure communication quality of the subbands preferentially assigned to some terminals and feed back the measured quality information. That is, the other terminals also measure communication quality of subbands which have a low or no possibility of being assigned and feed back the measured quality information. As a result, there is a problem that the amount of feedback information becomes enormous, causing the speed of communication from the terminals to the base station to reduce.

### SUMMARY OF THE INVENTION

According to an aspect of the present invention, there is provided with a base station which communicates with radio terminals through time frames for transmission by using a plurality of frequency channels, comprising:
a reception section configured to receive communication quality information indicating communication quality of one or more frequency channels from each the radio terminal;
a scheduling section configured to schedule frequency channels to be assigned to the respective radio terminals based on the communication quality information received from the respective radio terminals;
a signal generation section configured to generate assignment status signals indicating whether or not respective frequency channels are already assigned in a second time frame next to a first time frame; and
a reporting section configured to report the assignment status signals for the frequency channels to each the radio terminal through the first time frame.

According to an aspect of the present invention, there is provided with a radio terminal that communicates with a base station performing transmission through time frames using a plurality of frequency channels, comprising:
a reception section configured to receive signals on the plurality of frequency channels transmitted from the base station through a first time frame;
a detection section configured to detect assignment status signals indicating whether or not the plurality of frequency channels are already assigned in a second time frame next to the first time frame, from the received signals;
an identification section configured to identify unassigned frequency channels in the second time frame based on the assignment status signals detected;
a quality measuring section configured to measure communication quality of the unassigned frequency channels; and
a transmission section configured to transmit information indicating communication quality of the unassigned frequency channels measured to the base station.

According to an aspect of the present invention, there is provided with a radio communication method of communicating between radio terminals and a base station which performs transmission to the radio terminals through time frames by using a plurality of frequency channels, comprising:
transmitting communication quality information indicating communication quality of one or more frequency channels from each the radio terminal to the base station;
scheduling frequency channels to be assigned to respective radio terminals based on the communication quality information from the respective radio terminals;
generating assignment status signals indicating whether or not respective frequency channels are already assigned in a second time frame next to a first time frame;
mapping the assignment status signals to the respective frequency channels in the first time frame;
transmitting signals on the plurality of frequency channels through the first time frame to each the radio terminal;
detecting the assignment status signals from the signals on the respective frequency channels at each the radio terminal;
identifying unassigned frequency channels in the second time frame based on the assignment status signals detected;
measuring communication quality of the unassigned frequency channels; and
transmitting information indicating communication quality of the unassigned frequency channels to the base station from each the radio terminal.

### BRIEF DESCRIPTION OF THE DRAWINGS

FIG. 1 schematically shows an embodiment of a radio communication system according to the present invention;
FIG. 2 shows a mode of use of frequencies in downlink;
FIG. 3 is a block diagram schematically an embodiment of a base station according to the present invention;
FIG. 4 is a block diagram schematically showing an embodiment of a terminal according to the present invention;
FIG. 5 is a flow chart showing a flow of scheduling processing by the base station;
FIG. 6 is a flow chart showing an example of the flow of communication quality information generation processing by the terminal;
FIG. 7 illustrates an example of signal arrangement on a downlink of the radio communication system in FIG. 1;
FIG. 8 illustrates an example of a scheduling table;
FIG. 9 illustrates an example of a degree of importance set for subbands;
FIG. 10 illustrates an example of priority set for subbands;
FIG. 11 illustrates an example of purposes of use set for subbands; and
FIGS. 12A and 12B illustrate arrangement patterns of a destination terminal address.

### DESCRIPTION OF THE EMBODIMENTS

Hereafter, embodiments of the present invention will be described with reference to the attached drawings.

### (First Embodiment)

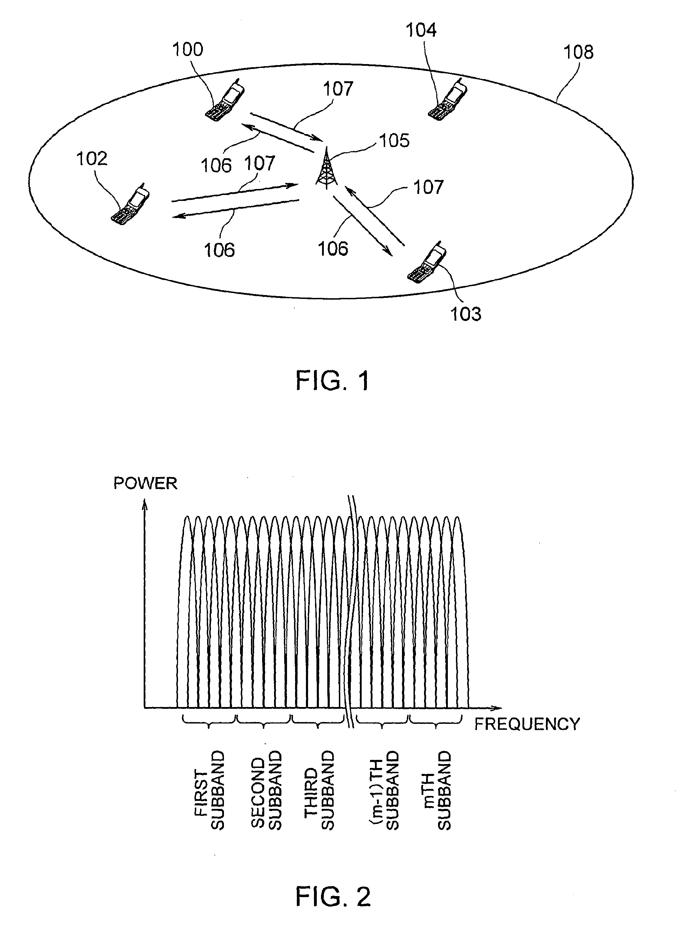

FIG. 1 shows an example of a radio communication system according to this embodiment. This radio communication system includes a base station 105 and a plurality of radio terminals (hereinafter simply referred to as "terminals") 101, 102, 103, 104. The terminal 101, terminal 102, terminal 103 and terminal 104 are located within reach of radio signals from the base station 105, that is, within a communication area (cell) 108.

Radio signal transmission from the base station 105 to the respective terminals 101 to 104 is called a "downlink 106" and radio signal transmission from the respective terminals 101 to 104 to the base station 105 is called an "uplink 107."

A multicarrier communication scheme such as OFDM (Orthogonal Frequency Division Multiplexing) or multicarrier CDMA (Code Division Multiple Access) is used for the downlink 106. In a multicarrier communication, communication is carried out using a plurality of subcarriers arranged on a frequency axis. An OFDM communication is assumed as a multicarrier communication below.

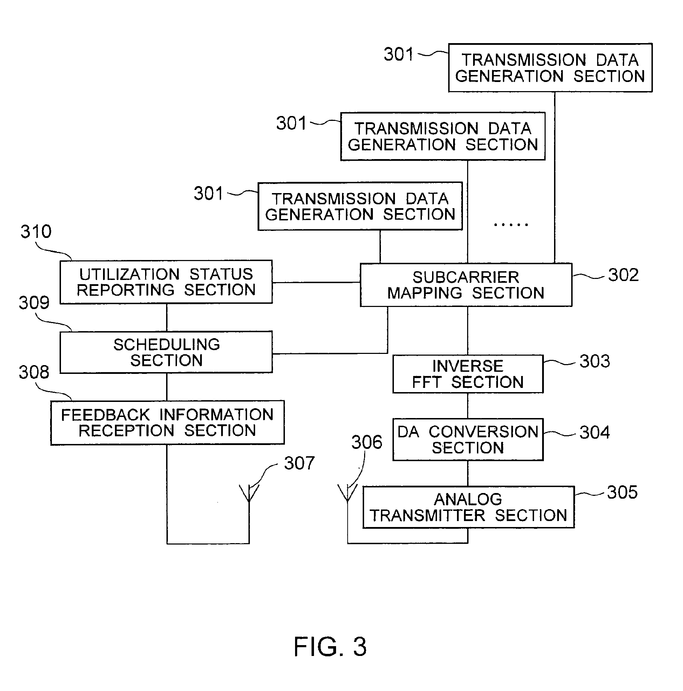

FIG. 2 shows an arrangement of subcarriers when an OFDM communication is carried out. The OFDM communication realizes high frequency utilization efficiency by arranging subcarriers so as to be orthogonal to each other. As shown in FIG. 2, subcarriers are divided into the plural to form a plurality of subbands. Here, first to mth subbands are formed. Each subband is made up of a single or a plurality of subcarriers. A plurality of terminals, a plurality of users or a plurality of bearers (lines) are assigned to the first to mth subbands (the first to mth frequency channels).

Here, one subband is made up of a plurality of neighboring subcarriers, but subcarriers making up a subband need not always be adjacent to each other and one subband may be composed of a set of subcarriers located apart from each other.

A multicarrier communication scheme such as OFDM, multicarrier CDMA can also be used for the uplink 107. In this embodiment, suppose the uplink 107 uses a frequency band different from that of the downlink 106 and the uplink 107 and downlink 106 can communicate simultaneously.

FIG. 3 shows an example of the configuration of the base station 105. This base station 105 is provided with a plurality of transmission data generation sections 301, subcarrier mapping section 302, an inverse FFT (Inverse Fast Fourier Transform) section 303, a DA (Digital-Analog) conversion section 304, a transmission analog section 305, a base station transmission antenna 306, a base station reception antenna 307, a feedback information reception section 308, a scheduling section 309 and an assignment status reporting section 310. The subcarrier mapping section 302 corresponds to, for example, a reporting section.

Each transmission data generation section 301 generates transmission data directed to its each terminal and outputs the transmission data generated to the subcarrier mapping section 302. The transmission data generation section 301 at the same time generates a known signal, that is, a pilot signal, determined with the terminal beforehand and adds the pilot signal generated to the transmission data. This pilot signal is used for the terminal not only to estimate a transmission path but also to perform frequency synchronization, symbol synchronization or frame synchronization.

The number of transmission data generation sections 301 provided corresponds to the number of terminals in communication with the base station 105. However, it is also possible to further provide a data generation section for multicast communication to send same data to a plurality of terminals or broadcast communication to send same data to all terminals or provide any one of the transmission data generation sections 301 with a function of generating data for multicast or broadcast communication.

The subcarrier mapping section 302 obtains modulated signals by assigning a plurality of transmission data passed from the plurality of transmission data generation sections 301 to signal points according to a modulation scheme. Various modulation schemes such as BPSK: (Binary Phase Shift Keying), QPSK (Quadrature Phase Sift Keying), 8PSK, 16PSK, ASK (Amplitude Shift Keying), FSK (Frequency Shift Keying), 16QAM (Quadrature Amplitude Modulation) can be used for modulation of transmission data.

The subcarrier mapping section 302 assigns the modulated signals acquired to an OFDM subcarrier group. Modulated signals corresponding to one transmission data are assigned to one or more subbands. That is, one or a plurality of subbands are assigned to one terminal. When assigning subbands, suppose there are no overlapping subbands between different transmission data. Note that a subband of each terminal is constant in one frame (or slot, subframe). A subband to which the modulated signals obtained from the transmission data are to be assigned is determined according to instructions from the scheduling section 309 which will be described later. Incidentally, the subcarrier mapping section 302 may also receive information indicating subbands to be assigned to the respective terminals from the scheduling section 309, modulate the information received and assign the modulated signals to a control channel (a specific subband).

Furthermore, the subcarrier mapping section 302 is given assignment status signals of the respective subbands from the assignment status reporting section 310. The assignment status signal indicates an assignment status of the subband in a frame (second time frame) next to the current frame (first time frame). The assignment status signal (assignment status signal) has a mode of assigned flag or unassigned flag depending on the assignment status. The subcarrier mapping section 302 maps (arranges) the assignment status signals of the respective subbands on corresponding subbands of the current frame.

The assignment status signals may also be arranged on a control channel. However, it is necessary to also arrange their corresponding subband numbers (identifiers) together with the assignment status signals. In this case, the amount of data transmitted through the control channel becomes enormous and enhancement of the transmission rate is required by widening of bandwidth of the control channel and multivalue modulation. However, when wider bandwidth is used for the control channel, the bandwidth of channel for transmitting data of users is narrowed and its transmission rate is decreased. Furthermore, introducing multivalue modulation causes a problem that the error resistance of the control channel is reduced and other control information indispensable to perform communications does not reach accurately. Therefore, suppose the assignment status signals are arranged in the corresponding subbands in the following explanations.

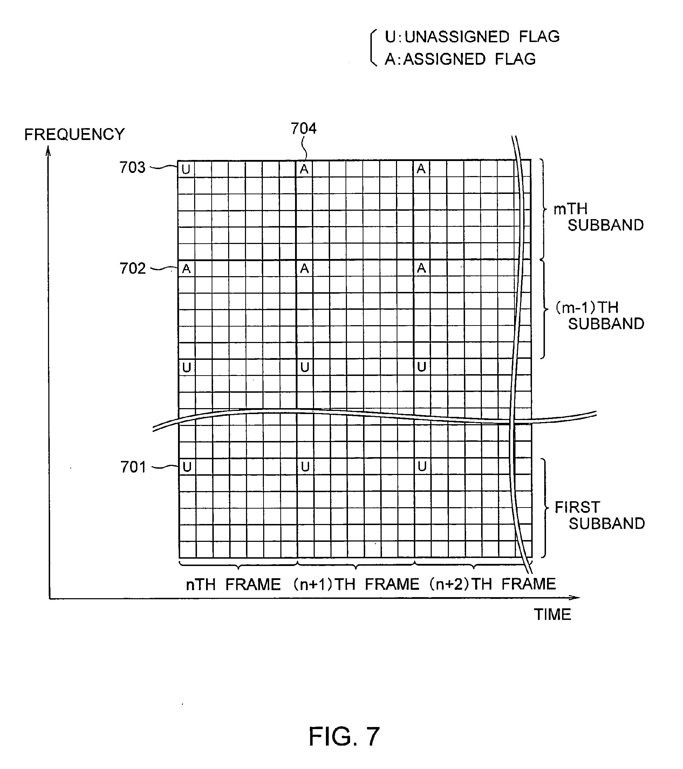

Here, an example of signal arrangement of a downlink will be shown in FIG. 7. Here, suppose an OFDMA (Orthogonal Frequency Division Multiple Access) communication whereby communication is performed using m subbands obtained by dividing an OFDM subcarrier group. That is, one frame (which may also be referred to as a "slot" or "subframe") is divided into m frequency channels (subbands) in the frequency axis direction. Suppose the current time point is located in an nth frame. An example where one frame is made up of seven symbols is shown here. Some subbands (e.g., second subband) of the first to mth subbands may be used as a control channel.

"Unassigned" flags 701, 703 indicate that a first subband and mth subband are not assigned in an (n+1)th frame next to the current nth frame yet. Furthermore, an "assigned" flag 702 indicates that an (m-1)th subband is already assigned in the (n+1)th frame next to the current nth frame.

In FIG. 3, the inverse FFT section 303 applies an inverse fast Fourier transform to the modulated signals assigned to respective subcarriers by the subcarrier mapping section 302 to generate transmission baseband signals.

The DA conversion section 304 converts the transmission baseband signals generated to analog signals and outputs them to the transmission analog section 305. The transmission analog section 305 up-converts the inputted analog signals to a radio frequency and emits the signals into space through the base station transmission antenna 306.

The base station reception antenna 307 receives a plurality of uplink radio signals transmitted from the respective terminals. The feedback information reception section 308 down-converts the received radio signals to baseband signals and demodulates and decodes the baseband signals generated. In this way, a plurality of received data transmitted over a plurality of uplinks are obtained.

The scheduling section 309 extracts quality information (CQI: Channel Quality Indicator) of each subband (frequency channel) of the downlink from each of the plurality of received data and determines a subband (frequency channels) to be assigned to each terminal based on the CQIs of the respective subbands extracted. This is called "scheduling." As a scheduling method, a round robin scheduling and proportional fairness schemes are well known. Suppose a scheduling period (frame intervals at which scheduling is performed) is, for example, once every 1 frame or every plurality of frames. Scheduling may also be performed only once when connected with the terminal.

Here, the scheduling period may vary from one subband to another or may differ from one time zone to another even with an identical subband. By so doing, an appropriate number of unassigned subbands (frequency channels) are created in each frame and the effect of simplifying search for free channels or scheduling can be expected. That is, when assigned subbands are concentrated on a specific frame and the number of unassigned subbands in other frames increases, the processing of judging which subbands should be assigned in other frames becomes heavier, but since unassigned subbands are properly distributed to various frames, free channel search and scheduling in each frame are simplified.

As an example of using a scheduling period which varies from one subband to another, it is possible to update assignment every one frame for channels not under QoS (Quality of Service) control and update assignment every several frames for channels under QoS control (e.g., channels for which a minimum transmission rate is guaranteed) (e.g., the same subband is assigned for each scheduling over several frames). For terminals under QoS control, the same subband is preferably assigned over a plurality of frames to avoid line interruption due to a shortage of available subbands. Note that during QoS control, it is also possible to set sufficient transmit power for the base station to avoid line interruption due to deterioration in transmission paths. It is also possible for the transmitting side and receiving side to use diversity technology.

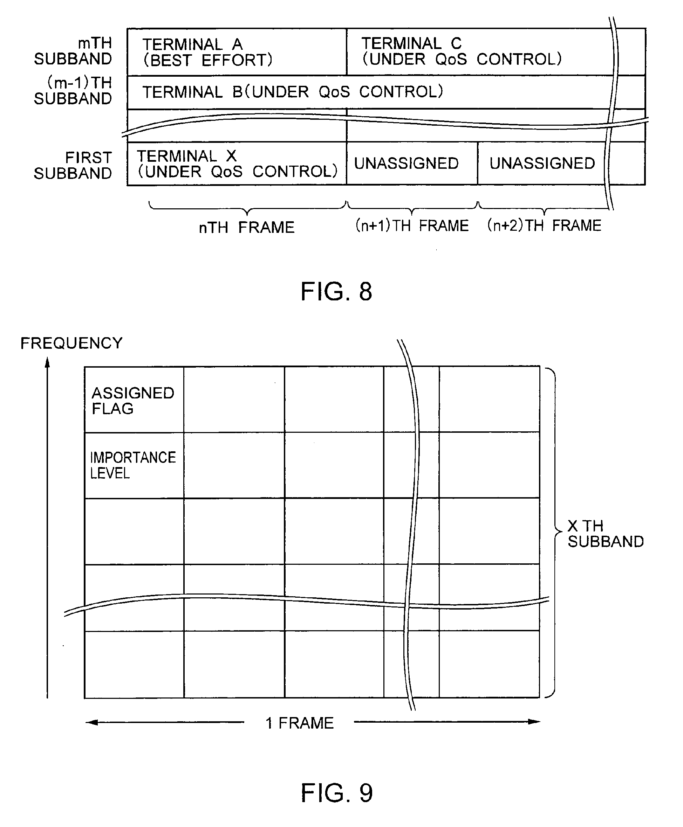

Here, the scheduling section 309 can control scheduling of each terminal using a scheduling table. An example of the scheduling table is shown in FIG. 8.

This scheduling table controls the situation of subband assignment from the current frame (here the nth frame) onward. Scheduling section 309 updates this scheduling table every time new subband assignment is determined.

At the time of transmission in the current nth frame, data under QoS control directed to a terminal X (e.g., data for which a minimum transmission rate is guaranteed) is transmitted in the first subband from the base station. Transmission of this data under QoS control is completed in the nth frame and the first subband remains unassigned in the (n+1)th frame and (n+2)th frame.

Furthermore, in the nth frame, data in the (m-1)th subband under QoS control directed to a terminal B is being transmitted from the base station and this QoS control data is also scheduled to continue in and after the (n+1)th frame. That is, also in the (n+1)th and (n+2)th frames, the (m-1)th subband is assigned to the terminal B.

Furthermore, in the mth subband of the current nth frame, data directed to a terminal A for carrying out a Best Effort communication is being transmitted from the base station.

Here, suppose a terminal C requests reception of data under QoS control during the nth frame. As a result of scheduling, the terminal C is assigned to the mth subband in the (n+1)th frame and (n+2)th frame as shown in the figure.

At the time of transmission in each frame, the scheduling section 309 detects subbands to which transmission data directed to each terminal is to be assigned based on this scheduling table and notifies it to the subcarrier mapping section 302. Furthermore, the scheduling section 309 notifies information indicating subbands assigned to each terminal to the subcarrier mapping section 302. The subcarrier mapping section 302 may also assign the notified subband information to, for example, a control channel to thereby notify subbands assigned to the respective terminals to the respective terminals.

In FIG. 3, the assignment status reporting section 310 checks the situation of assignment of the respective subbands in the frame next to the current frame based on the instruction from the scheduling section 309 or with reference to the scheduling table and generates, for subbands already assigned, an assignment status signal indicating that the subbands are already assigned and sends it to the subcarrier mapping section 302.

Furthermore, for subbands unassigned to the frame next to the current frame, the assignment status reporting section 310 generates an assignment status signal indicating that the subbands are unassigned and sends it to the subcarrier mapping section 302.

The subcarrier mapping section 302 maps assignment status signals indicating the situation of assignment of the respective subbands in the next frame to the corresponding subbands in the current frame. More specifically, for an already assigned subband in the frame next to the current frame, an assigned flag is assigned to the same subband in the current frame, and for an unassigned subband in the next frame, an unassigned flag is assigned to the same subband in the current frame (see FIG. 7).

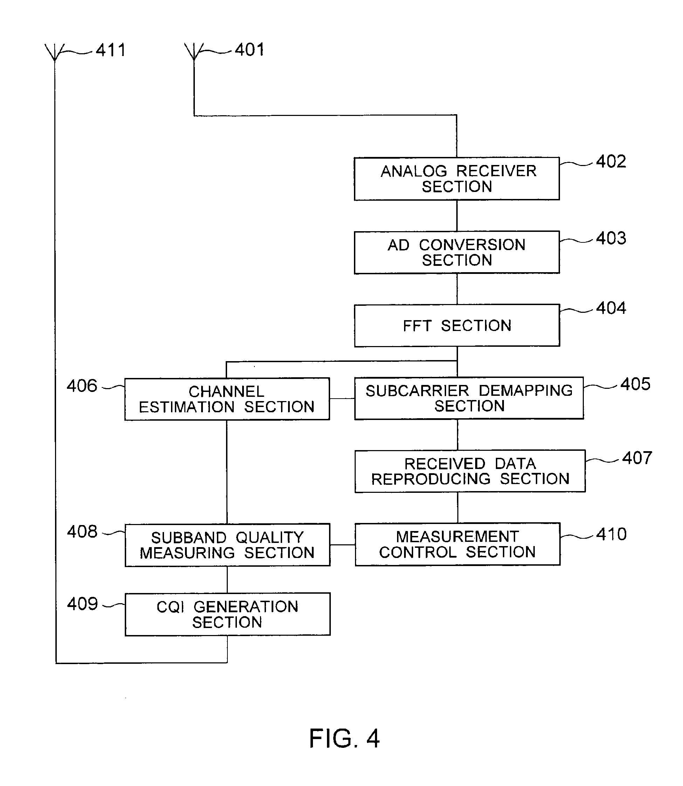

FIG. 4 shows an example of the configuration of a terminal. This terminal is provided with a terminal reception antenna 401, a reception analog section 402, an AD (Analog-Digital) conversion section 403, an FFT (Fast Fourier Transform) section 404, a subcarrier demapping section 405, a transmission path estimation section 406, a received data reproducing section 407, a subband quality measuring section 408, a CQI generation section 409, a measurement control section 410 and a terminal transmission antenna 411. The subcarrier demapping section 405, received data reproducing section 407, transmission path estimation section 406 or measurement control section 410 may also be provided with, for example, a function corresponding to a detection section. Furthermore, the measurement control section 410 may also be provided with, for example, a function corresponding to an identification section.

The terminal reception antenna 401 receives a radio signal transmitted from the base station and outputs the received radio signals to the reception analog section 402. The reception analog section 402 down-converts the inputted radio signals to baseband signals and gives it to the AD conversion section 403. The AD conversion section 403 converts the baseband signals given from the reception analog section 402 to digital signals through sampling and gives the digital signals to the FFT section 404. The FFT section 404 applies a fast Fourier transform (FFT) to the digital signals given from the AD conversion section 403 and extracts received signals of each subcarrier. The FFT section 404 outputs the extracted received signals of each subcarrier to the transmission path estimation section 406 and subcarrier demapping section 405.

The transmission path estimation section 406 estimates a transmission path response (amplitude variation and phase variation or the like) for each subcarrier from the frequency characteristics of a known signal, that is, pilot signal, included in the received signals of each subcarrier inputted from the FFT section 404. It is possible to obtain a transmission path response by comparing the shape of the pilot signal determined beforehand between the base station and terminal with the shape of the pilot signal arriving at the terminal distorted in the transmission path. The transmission path estimation section 406 notifies a transmission path response (transmission path estimation result) for each estimated subcarrier to the subcarrier demapping section 405 and subband quality measuring section 408.

The subcarrier demapping section 405 multiplies the received signals of each subcarrier inputted from the FFT section 404 by an inverse characteristic of the transmission path response of each subcarrier notified from the transmission path estimation section 406 and corrects the transmission path distortion of each subcarrier. The subcarrier demapping section 405 gives the received signals of each subcarrier with transmission path distortion corrected to the received data reproducing section 407.

The received data reproducing section 407 demodulates and decodes the received signals of each subcarrier given from the subcarrier demapping section 405, obtains received data of each subband and assignment status signals (assigned flag or unassigned flag) for detecting whether or not each subband is assigned to other terminals in subsequent communications.

The received data reproducing section 407 gives the received data of the subband(s) assigned to the own terminal to an application (not shown). The subband assigned to the own terminal is detected from, for example, the received data of the control channel.

The received data reproducing section 407 may demodulates and decodes (or only demodulate if an assignment status signal is not coded) only subcarriers to which an assignment status signal (assigned flag or unassigned flag) is assigned so as to detect whether or not each subband is assigned to other terminals in subsequent communications.

The contents of the assignment status signal of each subband obtained are checked and the check result is passed to the measurement control section 410.

Note that the assignment status signal may be extracted without any demodulation processing and decoding processing. When, for example, a 1-bit signal is transmitted as an assignment status signal (assigned flag or unassigned flag), it is possible to judge the contents of the assignment status signal according to the presence/absence of signal power. More specifically, suppose when signal power is equal to or higher than a threshold, the assignment status signal indicates an assigned flag and when the signal power is lower than the threshold, the assignment status signal indicates an unassigned flag.

Thus, when the contents of the assignment status signal can be extracted without demodulation processing and decoding processing, the subcarrier demapping section 405 can check the contents of the assignment status signal instead of the received data reproducing section 407. In this case, it is possible to eliminate demodulation processing and decoding processing to detect an assignment status signal, and therefore a reduction of load of terminal processing can be expected.

The subband quality measuring section 408 obtains a reception power value (e.g., average power value of subcarriers included in a subband) of each subband from the transmission path estimation result of each subband notified from the transmission path estimation section 406. The subband quality measuring section 408 then outputs the calculated reception power value of each subband to the CQI generation section 409. Subbands to be measured by the subband quality measuring section 408 are specified by the measurement control section 410.

The measurement control section 410 determines subbands to be measured by the subband quality measuring section 408 according to the contents of the assignment status signal of each subband obtained from the received data reproducing section 407 or subcarrier demapping section 405. More specifically, the measurement control section 410 determines to exclude subbands having assigned flags as the assignment status signal from the measurement targets and determines to include subbands having unassigned flags in the measurement targets.

When reception power of all subbands is measured as in the conventional case, there is a problem that the amount of processing increases, but the amount of processing can be reduced by designating only subbands having unassigned flags as measurement targets.

Here, when the own terminal is communicating with the base station, the subband quality measuring section 408 may also designate subbands being used for communication as measurement targets for the purposes of communication quality management and adaptive modulation or the like all the time. This embodiment assumes that terminals that are receiving data under QoS control measure the communication quality of subbands to which the data is mapped irrespective of the contents of flags. As the method of selecting subbands to be measured, any method other than that described above may be used.

The CQI generation section 409 generates a CQI to be fed back to the base station for each subband from the reception power value of each subband to be measured inputted from the subband quality measuring section 408. An example of CQI include reception power of subband, class number when the reception power of subband is classified or modulation schemes that can be received using the subband and error correcting coding rate or the like. The CQI generation section 409 feeds back the generated CQI of each subband to the base station through the terminal transmission antenna 411. When CQIs corresponding to all subbands are fed back as in the case of a conventional example, there is a problem that uplink communication resources are consumed and the transmission rate is decreased, but such a problem can be suppressed by narrowing down the number of CQIs to be fed back.

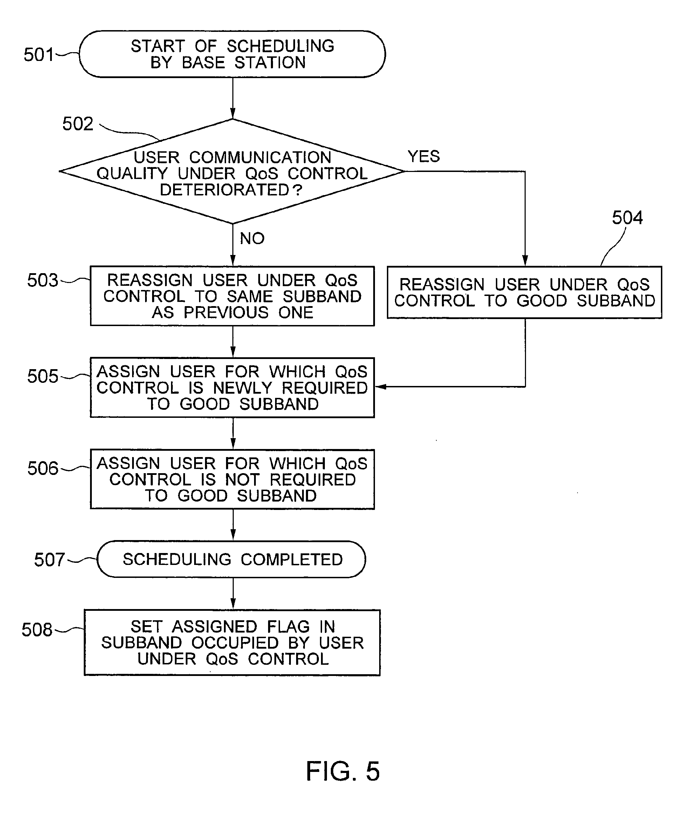

FIG. 5 shows an example of the flow of scheduling by the base station. Hereinafter, suppose a situation in which data under QoS control and data not under QoS control are mixed and transmitted over a downlink. Suppose the base station performs this scheduling processing for each terminal every 1 frame.

One or a plurality of subband CQIs are inputted to the scheduling section 309 from each terminal through the feedback information reception section 308 (501). First, the scheduling section 309 refers to CQIs of subbands under usage by the terminal out of CQIs fed back by the terminal under QoS control. When these CQIs indicate communication quality from which the communication is judged to be able to continue(predetermined criteria is satisfied) (No in 502), the scheduling section 309 judges that the same subbands can be used for the same terminal also in subsequent communications and assigns these subbands to the same terminal (503).

Here, a specific judgment as to whether or not the communication can be continued, that is, whether or not it is difficult to continue the communication is made as follows. For example, when the modulation scheme and error correcting coding rate currently used for communication are used continuously, it is judged whether or not it is possible to achieve an error rate lower than a desired error rate determined by the communication protocol and communication specification based on the reception power level described in the CQIs. When such a reception power level is described in the CQIs, it is judged that the communication can be continued and when such a reception power level is not described in the CQIs, it is judged that the communication can hardly be continued.

When it is judged that the communication can hardly be continued (Yes in 502), the scheduling section 309 assigns other subbands of good communication quality to the same terminal (QoS data reassignment processing) (504). As the scheduling method for assignment, methods such as round robin scheduling, proportional fairness scheduling or water filling are available.

Assignment of subbands is determined for data currently under QoS control through the above described processing.

Next, the scheduling section 309 assigns subbands to user data newly requiring QoS control (505). In this process, subbands other than the subbands already assigned in processes 503, 504 are assigned.

Next, the scheduling section 309 assigns subbands to users who do not require QoS control (506). Scheduling is performed last for users who do not require QoS control because a certain level of transmission delay, drop of communication speed or transmission error are considered to fall within an allowable range for the users who do not require QoS control. That is, this embodiment assigns data under QoS control before data not under QoS control and thereby reliably assigns subbands to data under QoS control.

Note that the scheduling methods used in processes 504, 505 and 506 need not always be the same. Moreover, suppose when free subbands run out in midflow of a process, user data that cannot be assigned subbands is not scheduled (such user data may be assigned in the next scheduling).

The scheduling is completed in this way (507). After this, the assignment status reporting section 310 generates assignment status signals (assigned flag) indicating that assignment has been completed for subbands scheduled by the scheduling section 309 to be used by the user under QoS control and generates assignment status signals (unassigned flag) indicating unassigned for other subbands. The subcarrier mapping section 308 then assigns the respective assignment status signals to the corresponding subbands (508).

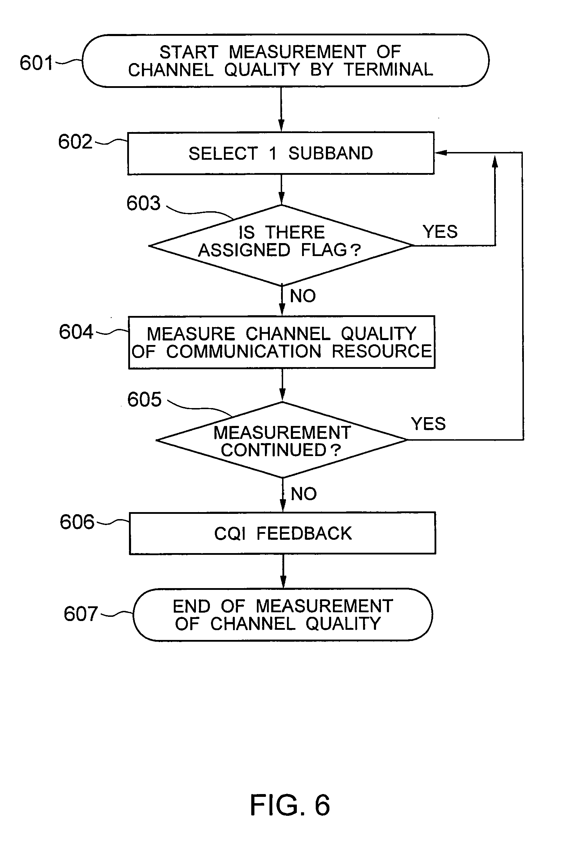

FIG. 6 shows an example of a CQI generation process at the terminal.

First, the measurement control section 410 selects one subband (601, 602). There is no particular limitation on the selection criteria of subbands and an arbitrary selection algorithm can be used.

The measurement control section 410 checks whether or not an assigned flag is set in a selected subband (603). When an assigned flag is set in the selected subband (Yes in 603), the measurement control section 410 moves back to 602 and selects another subband.

When no assigned flag is set (No in 603), that is, when an unassigned flag is set, the subband quality measuring section 408 calculates reception power as communication quality of the subband based on the transmission path estimation result (604), the CQI generation section 409 generates a CQI based on the reception power measured by the subband quality measuring section 408. However, suppose when data under QoS control is received, a CQI is generated for a subband in use for reception of the data irrespective of the flag contents.

It is checked whether or not the number of CQIs generated reaches the number of CQIs that can be fed back at a one time (predetermined number) and when the number of CQIs does not reach the predetermined number (Yes in 605), the measurement control section 410 moves back to 602 and repeats measurement.

When the number of CQIs generated reaches the number of CQIs that can be fed back at a one time (No in 605), the CQIs generated are fed back to the base station through the terminal transmission antenna 411 (606, 607).

Instead of the above described flow (602 to 605), the following operation can be performed. The terminal measures communication quality of all subbands in which no assigned flag is set and selects a predetermined number of subbands having good communication quality in descending order of communication quality. The terminal then generates CQIs for the selected predetermined number of subbands and feed them back to the base station.

When there are subbands in use for reception of data under QoS control, the communication quality of those subbands is also measured. The terminal preferentially selects the those subbands and then selects a scarce number of subbands for the predetermined number from among subbands in which the above described assigned flags are not set in descending order of communication quality. The terminal feeds back CQIs of these selected subbands to the base station.

In the above described situation, neither measurement of communication quality nor generation of CQIs is performed for subbands in which assigned flags are set in principle. However, even when a terminal can deprive a QoS terminal using subbands (terminal which is receiving data under QoS control) of the subbands in order to secure communication resources (subbands) in emergency, the terminal may feed back the CQIs of subbands in which assigned flags are set. However, suppose CQIs of subbands in which unassigned flags are set are fed back preferentially (first). The base station attempts to assign unassigned subbands preferentially, but when these unassigned subbands cannot be assigned, it is also possible to pick up subbands from other terminals and assign those subbands to the terminal in question. Scheduling by the base station is sequentially performed based on CQIs fed back from the terminal earlier. Therefore, subbands with CQIs fed back earlier are more likely to be assigned to the terminal.

As also partially described above, scheduling by the base station may be performed periodically or on an irregular basis.

When scheduling is performed on an irregular basis, it is possible to report more details of the scheduling status to the terminal by adding information indicating a term of validity (number of frames during which an assigned flag is valid) to an assigned flag. Thus, for example, the terminal can determine a time at which a flag should be checked next for subbands to which the information is added and there is no need to check the flag until that time. This reduces the processing load of the terminal. Of course, the base station may also set assigned flags with respect to assigned subbands all the time without adding information indicating the term of validity.

On the other hand, when scheduling by the base station is performed periodically, the status of scheduling by the base station is made more easily grasped for the terminal. For example, the system may determine that an assigned flag implicitly has a term of validity corresponding to a 1 scheduling period (that is, a certain number of frames) (in this case, the assigned flag is added to a frame immediately preceding the frame group of the next period) and add information indicating the term of validity of the assigned flag to the assigned flag using a multiple of the scheduling period every time an assigned flag is reported. By so doing, it is possible to carry out a check (check of an assignment status signal) of flags on the terminal side for a predetermined scheduling period and thereby reduce the load of a flag check.

### (Second Embodiment)

In a second embodiment, scheduling using a scheduling table will be described in detail though some parts of explanations overlap the explanations of the first embodiment.

As in the case of the first embodiment, suppose an OFDMA (Orthogonal Frequency Division Multiple Access) communication as shown in FIG. 7 whereby communication is carried out using m subbands obtained by dividing an OFDM subcarrier group into the plural. Suppose that the transmission path is temporally divided into frames and the current time point corresponds to an nth frame. Furthermore, as shown in the scheduling table in FIG. 8, suppose data under QoS control directed to a terminal X is being sent in a first subband from the base station during transmission in the current nth frame and the transmission of this data under QoS control is completed in the nth frame. Furthermore, suppose data under QoS control directed to a terminal B is being sent in an (m-1)th subband of the nth frame from the base station and this QoS control is scheduled to continue even in and after the (n+1)th frame. Furthermore, suppose data of a terminal A which carries out a best effort communication is being sent in the mth subband of the nth frame from the base station.

The flag arrangement corresponding to the scheduling table in FIG. 8 is as shown in FIG. 7. That is, the terminal X ends its occupation of the first subband in the nth frame, and therefore other terminals can use the first subband in and after the (n+1)th frame. Therefore, an unassigned flag 701 is set in the first subband of the nth frame. This unassigned flag 701 indicates that assignment of the first subband is indeterminate in the next frame ((n+1)th frame). This causes the base station to prompt other terminals to generate CQI for the first subband and collect the CQIs to realize scheduling for transmission of the (n+1)th frame.

With regard to the (m-1)th subband, QoS control data directed to the terminal B is anticipated to be sent in and after the (n+1)th frame, and therefore the base station sets an assigned flag 702 for the (m-1)th subband in the nth frame. As a result, the terminal does not perform measurement of communication quality, generation of CQI and feedback of CQI for the (m-1)th subband, and therefore the number of processes in the terminal decreases and the utilization efficiency of the uplink also improves.

In the nth frame, the mth subband is being used by the terminal A (in best effort communication), but use of the mth subband in the next (n+1)th frame is not determined, and therefore the base station sets an unassigned flag 703 for the mth subband of the nth frame.

Here, suppose the terminal C requests reception of data under QoS control during the nth frame and as a result of scheduling, the terminal C is assigned to the mth subband in the (n+1)th frame and (n+2)th frame. Since the mth subband is expected to be used continuously by the terminal C in and after the (n+2)th frame, the base station sets an assigned flag 704 for the mth subband during in the (n+1)th frame.

Here, the assigned flag or unassigned flag may be made up of 1 bit or a plurality of bits. Furthermore, error correcting coding may also be applied to the flag. However, even if an error occurs in demodulation of the flag and bit is confirmed as unassigned flag by mistake, that will only provoke a tiny increase of measurement processing of communication quality in the terminal and slight deterioration of the utilization efficiency of the uplink due to unnecessary feedback of CQIs, hardly causing fatal trouble. Therefore, it is possible to limit to transmission of only 1 bit without carrying out error correcting coding and suppress redundancy of flags.

As described above, it is possible to prevent other terminals from carrying out measurement of communication quality in a subband exclusively occupied by one terminal due to QoS control in progress. This reduces the load of processing of measuring communication quality in other terminals, allowing low power consumption of the terminals. Furthermore, it is possible to improve the utilization efficiency of the uplink.

### (Third Embodiment)

A third embodiment is characterized by adding information indicating a degree of importance of transmission data to an assigned flag. Hereinafter, this embodiment will be explained in detail.

As data transmitted from a base station to each terminal, there are data having a high degree of importance, interruption of transmission of which is hardly allowed or data having a low degree of importance, interruption of transmission of which may be allowed if necessary. Thus, the base station assigns not only an assigned flag but also information indicating a degree of importance of data carried by the subband to which data under QoS control is assigned, to the subband. That is, the degree of importance is included in an assignment status signal indicating that assignment is already completed. The degree of importance may have two values so as to be described with 1 bit, but by using a plurality of bits to express the degree of importance with multivalues, the degree of importance can be controlled in more detail.

An example where an assigned flag and degree of importance are assigned to an Xth subband will be shown in FIG. 9. A received data reproducing section 407 in a terminal demodulates signals of a subband in which an assigned flag is set (demodulates subcarriers assigned at least a degree of importance) and acquires the degree of importance set in the subband.

A measurement control section 410 in the terminal compares a degree of importance of data to be received by the own terminal with the degree of importance acquired. Incidentally, suppose the degree of importance of the data to be received by the own terminal is included in the received data from the base station to the terminal.

When the degree of importance of data to be received by the own terminal is greater than the acquired degree of importance, the measurement control section 410 judges that the subband can be acquired. The measurement control section 410 instructs a subband quality measuring section 408 to measure communication quality of subbands judged to be acquirable in ascending order of the degree of importance.

A CQI generation section 409 generates CQIs based on the communication quality measured by the subband quality measuring section 408.

The terminal then feeds back CQIs of subbands in which unassigned flags are set and CQIs of subbands judged to be acquirable to the base station. In this case, the CQIs of the subbands in which unassigned flags are set are fed back preferentially (first). After this, subbands judged to be acquirable are fed back in ascending order of the degree of importance. In this time, the terminal may also transmit the degree of importance of data to be received by the own terminal together.

Furthermore, when the degree of importance of the data to be received by the own terminal is equal to or lower than the acquired degree of importance, the terminal preferably does not feed back the CQI of the subband so as not to interfere with the communication of the subband in which this degree of importance is set.

When, for example, subbands in which unassigned flags are set cannot be assigned to the terminal, the base station side can also perform processing of picking up subbands of a low degree of importance from other terminals and assigning them to the terminal.

### (Fourth Embodiment)

A fourth embodiment is characterized in that information indicating priority or purpose of use of a subband is added to an unassigned flag. This embodiment will be explained in detail below.

First, a mode in which information indicating priority is added to an unassigned flag will be explained.

When assigning an unassigned flag to a subband, the base station adds information indicating priority made up of a single bit or a plurality of bits to the unassigned flag. That is, a base station includes priority in an assignment status signal indicating unassigned. In this way, the base station sets priority in subbands, and can thereby cause a terminal to preferentially measure communication quality and generate CQIs of subbands with high priority. More specifically, the base station sets priority in subbands and adds information indicating this priority to an unassigned flag.

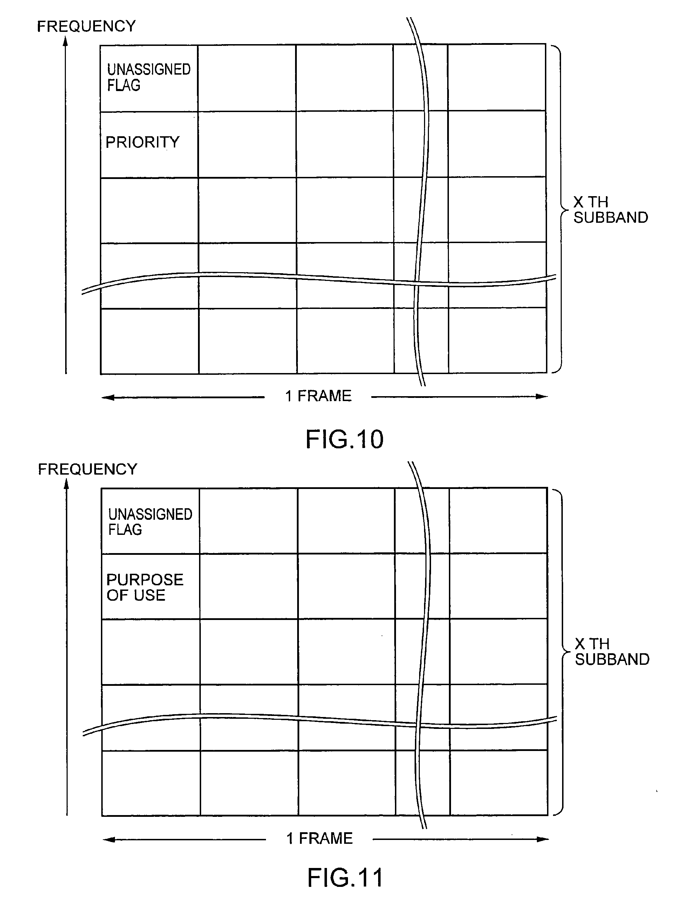

FIG. 10 shows an example where an unassigned flag and priority are assigned to an Xth subband. A measurement control section 410 in the terminal instructs a subband quality measuring section 408 to measure communication quality of subbands in which unassigned flags are set in descending order of priority. A CQI generation section 409 then generates CQIs from the measured communication quality. The terminal feeds back the CQIs generated to the base station in descending order of priority. By assigning priority to unassigned flags as shown above, it is possible to obtain the following effects.

For example, when the base station increases priority of subbands with less interference from cells of other base stations, the terminal assigned such subbands can perform faster downlink communications.

Furthermore, when the base station gives higher priority to a plurality of neighboring subbands that can be secured collectively, the terminal that has been successfully assigned the plurality of neighboring subbands can narrow the frequency band when performing filtering.

Next, a mode in which information indicating a purpose of use of a subband is added to an unassigned flag will be explained.

When assigning an unassigned flag to a subband, the base station adds information indicating the purpose of use of the subband made up of a single bit or a plurality of bits to an unassigned flag. That is, the base station includes the purpose of use of the subband in an assignment status signal indicating unassigned.

For example, the base station adds information describing the purpose of use of the subband such as use for best effort communication, for packet access, for a QoS control signal or for large capacity communication to an unassigned flag. FIG. 11 shows an example where an Xth subband is assigned an unassigned flag and purpose of use. The measurement control section 410 in the terminal preferentially instructs the subband quality measuring section 408 to measure communication quality of subbands having a purpose of use equal to or similar to the type (purpose of use) of data to be communicated with the own terminal out of subbands in which unassigned flags are set. The CQI generation section 409 generates CQIs based on the communication quality measured by subband quality measuring section 408. The terminal feeds back the CQIs of the subbands having the above described equal or similar purpose of use preferentially (first).

### (Fifth Embodiment)

Since an assignment status signal (assigned flag or unassigned flag) is classified as a control signal, the assignment status signal does not directly contribute to improvement of a transmission rate of user data and rather consumes communication resources for transmission of flags. Thus, in this embodiment, flags are multiplexed with other control data using a method which will be explained below so that communication resources are used efficiently.

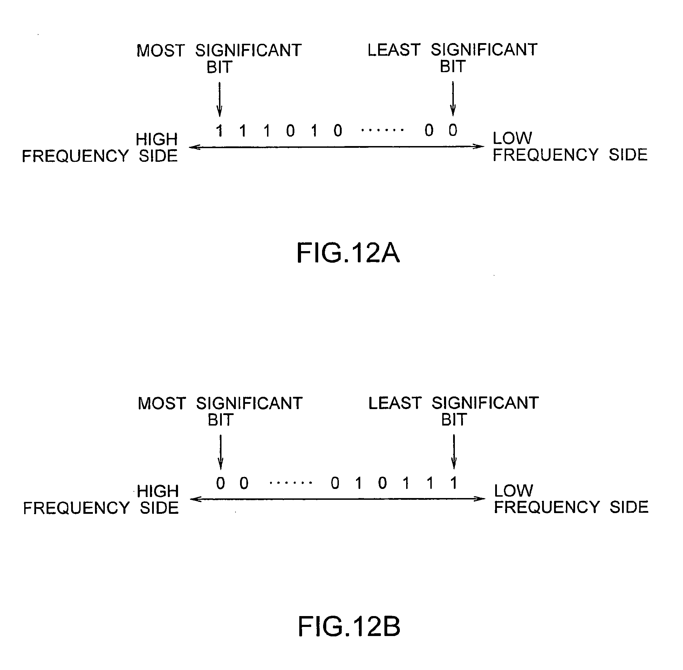

As one multiplexing method, a destination terminal address included in transmission data of a subband will be used. When it is reported to the terminal that assignment is done for a subband, a destination terminal address described in the subband is arranged in such a way that higher bits come to a higher frequency and lower bits come to a lower frequency in a frequency axis instead of assigning an assigned flag for the subband. This example will be shown in FIG. 12(A).

On the other hand, when it is reported to the terminal that assignment is not done for a subband (when unassigned is reported), the arrangement of address bits is reversed in such a way that higher bits come to a lower frequency and lower bits come to a higher frequency. This example will be shown in FIG. 12(B).

A measurement control section 410 or received data reproducing section 407 in a terminal reads a destination terminal address using the above both address arrangement methods with reference to a destination terminal address field in a subband during reception. The terminal is judged by selecting a more likely address from the two addresses obtained. In this case, the address arrangement method corresponding to the selected address also indicates the presence/absence of an assignment.

When, for example, an actual address is "111010...00" (suppose the leftmost "1" denotes a most significant bit and the rightmost "0" denotes a least significant bit), the address arrangement as shown in FIG. 12(A) is judged to indicate the absence of an assignment report and the address arrangement as shown in FIG. 12(B) is judged to indicate the presence of an assignment, or vice versa. That is, according to the above described method, two patterns of address arrangement of the terminal are provided so as to judge the presence/absence of an assignment depending on in which pattern of address arrangement the address of the terminal is arranged.

The reason that the presence/absence of an assignment can be judged depending on the address arrangement pattern is as follows. A wide address space is generally provided for addresses so as to be able to accommodate many users. However, since the actual number of terminals in communication is by far smaller than the size of the address space, there is a high possibility that a bit string obtained by inverting the high and low order of an actual terminal address (reading the address inversely) may be an address which is actually not in use. The above described technique uses this characteristic. In addition to destination terminal addresses, this embodiment may also be applied to a control signal indicating other control information such as a signal indicating a modulation scheme and a signal indicating a coding scheme.

As another multiplexing method, it is possible to provide two types of pilot signal to be used for a transmission path estimation process and synchronization process in a terminal and judge that there is no assignment when one pilot signal is transmitted from the base station and judge that there is an assignment when the other pilot signal is transmitted.

For example, it is judged that there is no assignment when "101010...010" (first pilot signal) is sent as a pilot signal, and it is judged that there is an assignment when "110110...110" (second pilot signal) is sent.

That is, according to this method, the terminal is waiting so as to be ready for receiving pilot signals of two types, judges a signal of which of the two types is arriving and thereby judges the presence/absence of an assignment.

The processing of detecting a pilot signal of which of the two types is sent is performed by any one of, for example, a transmission path estimation section 406, subcarrier mapping section 405, received data reproducing section 407 and measurement control section 410.

Furthermore, at the same time as the judgment of the presence/absence of an assignment report, transmission path estimation may also be performed, and in such a case, the processing can also be carried forward efficiently.

### (Sixth Embodiment)

In an environment in which a base station holds a plurality of downlinks and terminals of the respective downlinks are moving independently of each other, the speeds of variation in transmission path conditions of the respective downlinks are likely to differ from one terminal to another.

For example, the transmission path condition changes faster on a downlink of a terminal which is moving fast than on a downlink of a terminal which is moving slowly.

This embodiment is characterized in that scheduling is performed at shorter intervals for a downlink on which the transmission path condition changes at a high speed, while scheduling is performed at longer intervals for a downlink on which the transmission path condition changes at a low speed. This embodiment will be explained in detail below.

The speed of variation in a transmission path condition can be recognized by storing a plurality of CQIs to be fed back from a terminal and calculating a difference in CQI of an identical subband at different times.

For example, even in the case of CQIs of the same subband sent from the same terminal at short feedback time intervals, if there is a great difference in contents of the CQIs, it is recognized that the transmission path condition changes at a high speed.

On the other hand, even in the case of CQIs sent from the same terminal at long feedback time intervals, if there is not a great difference in contents of the CQIs, it is recognized that the transmission path condition changes at a low speed.

The speed of variation in a transmission path condition corresponds to, for example, a variation level of the transmission path per unit time.

The speed of variation in the transmission path condition may be calculated by, for example, a scheduling section 309. The scheduling section 309 shortens scheduling intervals for terminals having a high speed of variation in the transmission path condition and lengthens scheduling intervals for terminals having a low speed of variation in the transmission path condition.

## Claims

1. A base station which communicates with radio terminals through time frames for transmission by using a plurality of frequency channels, comprising:
a reception section configured to receive communication quality information indicating communication quality of one or more frequency channels from each the radio terminal;
a scheduling section configured to schedule frequency channels to be assigned to the respective radio terminals based on the communication quality information received from the respective radio terminals;
a signal generation section configured to generate assignment status signals indicating whether or not respective frequency channels are already assigned in a second time frame next to a first time frame; and
a reporting section configured to report the assignment status signals for the frequency channels to each the radio terminal through the first time frame.

2. The base station according to claim 1, wherein the reporting section reports the assignment status signals by mapping the assignment status signals to the respective frequency channels in the first time frame.

3. The base station according to claim 1, wherein the scheduling section schedules the frequency chanels to be assigned to a first radio terminal and a second radio terminal at different frame intervals between the first radio terminal and the second radio terminal.

4. The base station according to claim 1, wherein the scheduling section calculates a variation level per unit time of a transmission path to the radio terminal from the communication quality information received from the radio terminal and determines frame intervals of scheduling for the radio terminal according to the calculated variation level.

5. The base station according to claim 1 wherein the signal generation section includes information indicating the number of frames to which the frequency channel are consecutively assigned in and after the second time frame in the assignment status signal associated with the frequency channel.

6. The base station according to claim 1, wherein the scheduling section schedules the frequency channels to be assigned to each the radio terminal at the same frame intervals.

7. The base station according to claim 6, wherein the signal generation section includes information indicating that the frequency channel is assigned over time frames of same number as the same frame intervals in and after the second time frame, in the assignment status signal associated with the frequency channel.

8. The base station according to claim 1, wherein when communication quality of the frequency channel assigned to the radio terminal by previous scheduling satisfies predetermined criteria, the scheduling section assigns the same frequency channel to the radio terminal consecutively.

9. A radio terminal that communicates with a base station performing transmission through time frames using a plurality of frequency channels, comprising:
a reception section configured to receive signals on the plurality of frequency channels transmitted from the base station through a first time frame;
a detection section configured to detect assignment status signals indicating whether or not the plurality of frequency channels are already assigned in a second time frame next to the first time frame, from the received signals;
an identification section configured to identify unassigned frequency channels in the second time frame based on the assignment status signals detected;
a quality measuring section configured to measure communication quality of the unassigned frequency channels; and
a transmission section configured to transmit information indicating communication quality of the unassigned frequency channels measured to the base station.

10. The radio terminal according to claim 9, wherein the quality measuring section further measures communication quality of the frequency channels already assigned in the second time frame, and
the transmission section transmits information indicating communication quality of the assigned frequency channels to the base station after transmitting information indicating communication quality of the unassigned frequency channels.

11. The radio terminal according to claim 9, wherein the assignment status signals indicating that the frequency channels are assigned in the second time frame includes information indicating degree of importance of data carried on the frequency channels,
the quality measuring section further measures communication quality of the frequency channels already assigned in the second time frame, and
the transmission section transmits information indicating communication quality of the assigned frequency channels to the base station in order of the frequency channel carrying data of low degree of importance, after transmitting information indicating communication quality of the unassigned frequency channels.

12. The radio terminal according to claim 11, wherein the transmission section transmits information indicating the communication quality only about frequency channels carrying data of lower degree of importance than the degree of importance of data to be received.

13. The radio terminal according to claim 9, wherein assignment status signals indicating that frequency channels are unassigned in the second time frame includes information indicating priority levels of the frequency channels, and
the transmission section transmits information indicating the communication quality of the unassigned frequency channels in order of the frequency channel with high priority.

14. The radio terminal according to claim 9, wherein the assignment status signals indicating that the frequency channels are unassigned in the second time frame includes information indicating purposes of use of the frequency channels, and
the transmission section transmits the information indicating the communication quality of the unassigned frequency channels having certain purpose of use earlier than those of the unassigned frequency channels not having the certain purpose of use.

15. The radio terminal according to claim 9, wherein the received signals of the respective frequency channels includes control information on the frequency channels,
the detection section detects signals indicating the control information as assignment status signals of the frequency channels, and
the identification section detects whether an arrangement of a bit string of signals indicating the control information on a frequency axis has a first arrangement pattern in which higher bits of the bit string are on a high frequency side and lower bits of the bit string are on a low frequency side or a second arrangement pattern in which higher bits of the bit string are on a low frequency side and lower bits of the bit string are on a high frequency side, and determines whether or not the frequency channel is unassigned depending on whether the arrangement of the bit string has which of the first or second arrangement pattern.

16. The radio terminal according to claim 15, wherein the detection section detects a terminal address as signals indicating the control information.

17. The radio terminal according to claim 9, wherein the received signals of the frequency channels includes any one of first and second pilot signals,
the detection section detects a pilot signal as an assignment status signal of the frequency channel, and
the identification section determines whether or not the frequency channel is unassigned depending on which of the first or second pilot signal is detected.

18. A radio communication method of communicating between radio terminals and a base station which performs transmission to the radio terminals through time frames by using a plurality of frequency channels, comprising:
transmitting communication quality information indicating communication quality of one or more frequency channels from each the radio terminal to the base station;
scheduling frequency channels to be assigned to respective radio terminals based on the communication quality information from the respective radio terminals;
generating assignment status signals indicating whether or not respective frequency channels are already assigned in a second time frame next to a first time frame;
mapping the assignment status signals to the respective frequency channels in the first time frame;
transmitting signals on the plurality of frequency channels through the first time frame to each the radio terminal;
detecting the assignment status signals from the signals on the respective frequency channels at each the radio terminal;
identifying unassigned frequency channels in the second time frame based on the assignment status signals detected;
measuring communication quality of the unassigned frequency channels; and
transmitting information indicating communication quality of the unassigned frequency channels to the base station from each the radio terminal.
